# EUROPEAN PATENT SPECIFICATION

(11) **EP 3 731 202 B1**
(45) Date of publication and mention of the grant of the patent: **17.12.2025**
(21) Application number: 20169499.9
(22) Date of filing: 14.04.2020
(51) Int. Cl.: G08B 21/04

(54) **METHOD AND SYSTEM FOR MONITORING STATUS AND FUNCTION OF AN OBJECT**
VERFAHREN UND SYSTEM FÜR DIE ÜBERWACHUNG DES ZUSTANDS UND FUNKTIONS EINES OBJEKTS
PROCÉDÉ ET SYSTÈME DE SURVEILLANCE D'ÉTAT ET FONCTION D'OBJET

(30) Priority: 12.04.2019 FI 20197065
(43) Date of publication of application: 28.10.2020
(73) Proprietor: doop Osakeyhtiö, 20100 Turku (FI)
(72) Inventor: Lehtonen, Antero, 20210 Turku (FI)

(56) References cited:
- WO-A1-2018/187557
- US-A1- 2002 116 080
- US-A1- 2012 242 501
- US-A1- 2013 211 291
- US-A1- 2017 050 467
- US-A1- 2018 082 557
- US-B1- 10 096 219

## Description

### TECHNICAL FIELD OF THE INVENTION

The invention relates to a method and a system for monitoring state and operation of an object as set out in the preambles of the independent claims below. The invention particularly relates to a new way of monitoring a medical treatment device or a medicine storage device of a care facility.

### TECHNICAL BACKGROUND

Monitoring devices based on monitoring the movement or location of an object have been developed for a long time. For example, patent publication US 6819247 B2 presents a portable patient monitoring and alarm device, which has a casing that can be attached to the patient, e.g. to her clothes. Inside the casing there are a processor, wireless transmitter, locating device, and a sensor. The sensor monitors movement, speed, acceleration or orientation of the device. After the sensor has measured a certain type of movement, the processor transmits a signal containing information about possible need for assistance and about the location of the device.

Tracking of a movable object such as a patient is described in patent publications US 2002/116080 A1, US 2012/242501 A1, US 2018/082557 A1, US 2013/211291 A1, WO 2018/187557 A1. Tracking of an inanimate object such as furniture is described in patent publications US 2017/050467 A1, US 10096219 B1.

The applications of the prior art are often complex, expensive and difficult to use.

### OBJECT OF THE INVENTION

It is an object of the present invention to reduce or even eliminate the abovementioned problems appearing in prior art.

It is an object of the present invention provide solutions for using opportunities offered by an accelerometer in simple, user friendly and efficient ways.

It is an object of the present invention to enhance the control and monitoring of items of a care facility.

It is an object of the present invention to provide for a new way of controlling risk of transmission of a disease, especially in care facilities such as hospitals.

### SUMMARY OF THE INVENTION

Among others, in order to realize the objects mentioned above, method and system according to the invention are characterized by what is presented in the enclosed independent claims.

The embodiments and advantages mentioned in this text relate, where applicable, as well to the method and system of the invention, even though it is not always specifically mentioned.

In a method according to the invention for monitoring status and operation of a medical treatment device of a care facility or a medicine storage device of a care facility, a sensor device is used, which sensor device comprises an accelerometer, a radio transmitter, a micro controller and a power source that are functionally connected with each other. The sensor device may comprise a case, having a storage space where the above-mentioned parts of the sensor device are placed. The method comprises at least the following steps:
- attaching or integrating said components of the sensor device (20) to the monitored device;
- producing an acceleration signal with the accelerometer:
- converting the acceleration signal into acceleration data;
- controlling the radio transmitter with the microcontroller so that it transmits acceleration data to a receiver;
- storing the acceleration data in a data storage, such as a database;
- monitoring movement, speed, acceleration and/or orientation of the device on basis of the acceleration data;
- analysing the data stored in the data storage algorithmically with an analysation module;
- with an analysation module drawing conclusions on basis of the analysis about what and/or where has occurred and/or will occur to the device being observed.

On basis of the analysis:
- with an execution module alerting the device and/or a party supervising the device. A system according to the invention for monitoring status and operation of a medical treatment device of a care facility or a medicine storage device of a care facility, comprises
- a sensor device, which comprises an accelerometer, a radio transmitter, a micro controller and a power source that are attached or integrated to the monitored device and functionally connected with each other. The sensor device may comprise a case, having a storage space where the above-mentioned parts of the sensor device are placed. The accelerometer is arranged to produce an acceleration signal, which is converted into acceleration data. The microcontroller is arranged to control the radio transmitter. The radio transmitter is arranged to transmit acceleration data to a receiver;
- a receiver for receiving and saving the acceleration data;
- a data storage, such as a database, in which the acceleration data is stored;
- an analysation module, which is arranged to monitor movement, speed, acceleration and/or orientation of the device on basis of the acceleration data, and to analyse the data stored in the data storage algorithmically, and to deduce, i.e. to draw conclusions, on basis of the analysis about what and/or where has occurred and/or will occur to the device being observed;
- an execution module, which is arranged to perform on basis of the analysis at least the following operation: alerting and/or notifying the device and/or a party supervising the device.

The algorithmically performed analysing means computer analysis known as such, utilising e.g. mathematical functions, matrix calculus, neural networks and/or artificial intelligence.

The acceleration signal produced by the accelerometer may be, for example, analog or digital. The acceleration signal is transformed to or it transforms to acceleration data, e.g. when it is saved in a data storage, such as an electronic memory device or when it is analysed and otherwise processed.

According to the invention, the object to be monitored is a medical treatment device of a care facility or a medicine storage device of a care facility. The care facility can be, for example, a hospital, a health care centre, a nursing home or a rehabilitation institution. A device to be monitored can be, for example, an electronic device or an electronic medical treatment device. A monitored device can be e.g. a device such as a medical treatment device such as an IV stand, or electrical medical treatment device such as a defibrillator or a ventilator, or a medicine storage device such as a pill dispenser or a medicine jar. In an application, the invention is used to monitor or locate such devices.

For example, a particular item, or the nearest particular item, such as the nearest defibrillator, can be found quickly by means of the invention.

Particularly care facilities, such as hospitals, have a number of items and devices whose movement, speed, acceleration or orientation are of great importance, but whose monitoring considering these properties has not previously been satisfactorily arranged.

Examples of devices for which it is important to know the movement, the speed of movement and/or the direction of movement are items whose location is of importance, e.g. items that are intended to be moved or immobile in normal use. The location of items or patients can be monitored with the location and movement data of objects transferred from one hospital room to another or from one ward to another, such as data terminals. Movement data can be used to monitor a patient's treatment, for example, to accurately record trips, directions, and speeds of the patient on a rollator or wheelchair. Motion and direction data can be used to open and close doors and passageways in the right direction and at the right time, and to guide a patient or his or her escort in the right direction.

On the other hand, the invention can be used to warn of the movement of objects intended to be immobile, for example some treatment devices must remain in the same location and sometimes they are not even to be shaken.

Examples of objects for which acceleration data is important to know are devices and items that are easily damaged. It would be good to immediately notice any inappropriate, careless or too rough handling of many objects, especially medical treatment devices. In the past, it has not been possible to detect, e.g. a drop of a defibrillator on the floor or a shove of a ventilator. Now, this kind of events can be automatically logged into a system and they may be reported to the appropriate party, e.g. to the maintenance staff. A roughly handled device can be quickly inspected to ensure that it is in good working order.

It is important to know the location and/or movement of some items in relation to location and/or movement of some other thing, such as the patient. Items that each patient necessarily needs may be registered in the memory of the system. These can be, for example, medical care equipment required by the patient, such as health-sustaining equipment or medicines.

In an embodiment of the invention, when movement of a patient is observed to exceed certain limit values, e.g. when the patient rises from the bed or when she or he approaches the door, it is verified whether the patient is accompanied by items he or she needs. If the system detects that the patient is moving without an item she/he needs, the event is reported to the device, to the patient, to surroundings of the device and/or to a party supervising the device.

For example, a sensor device according to the invention attached to a medicine jar and forgotten on a table may give an audio signal.

Sometimes it may be necessary to prevent devices from locations and/or movement exceeding certain limit values. For example, if the system detects that movement of a monitored device exceeds certain limit values, it can check that the movement of the device is permitted. If it is noted that there is no authorisation for the movement, it is determined that unauthorized movement of the device has taken place, and the event is reported to the device, to surroundings of the device and/or to a party supervising the device.

For example, if someone is trying to move without permission a device, which is meant to be used only in a certain room or department, the staff can be informed of the event or specific doors or passageways may be closed and/or locked.

Examples of items, the orientation of which is important to know, are devices which work properly only when in a correct orientation and which are at risk of ending up in an incorrect orientation. These include e.g. various medical treatment devices such as IV stands. Operation of many items may be possible but undesirable in a wrong orientation. For example, turning or moving a ventilator out of its normal orientation is often highly undesirable. Now, an alarm can be sent of such an event even in real-time, for example to personnel.

In the past, it has not been realized that it would be advantageous to monitor the status and function of objects in a care facility with a simple sensor device of the invention, which has e.g. placed in a case and its storage space an accelerometer, a radio transmitter, a microcontroller and a power supply. The use of this sensor device, known per se, makes it possible for the first time to monitor the movement, speed, acceleration and/or orientation of an object. In addition, it is now possible on the basis of the collected data, to perform an analysis with artificial intelligence known per se, on the basis of which it can be deduced what and/or where has happened to the monitored object or its user, such as a patient, and, for the first time, what will happen to the object.

This ability to collect and analyse information enables the invention to be applied to, for example, issuing of alarms and notifications, management of doors and passageways, monitoring of status of items and the management of the risk of transmission of a disease.

For example, the acceleration data produced by the accelerometer and the signals from the radio transmitter can be used to detect the location and direction of movement of the objects in the care facility, to detect the falling of items or to be able to estimate their speed. For example, automatically opening doors can be programmed to open at the right time using the information provided by the invention. For the first time, the right doors can now be opened and locked at just the right moment and in the direction of movement permitted or predicted for the object.

With the invention, the possibilities of managing the risk of transmission of a disease are unprecedentedly effective.

The alarm that can be issued to a device, a patient and/or a party supervising the device can be e.g. a light or sound signal given to the vicinity of the object or an alarm issued to personnel.

The notification, which may be issued to a device a patient and/or a party supervising the device can be the sending of acceleration data, or other data, or location of a device collected according to the invention.

In one embodiment of the invention an alarm and/or notification is not issued on basis of an analysis to an object and/or a party monitoring the object. In one embodiment of the invention, at least one or more of the following operations are performed:
- issuing an alarm and/or on a notification to a device and/or to a party supervising the device
- opening, closing and/or locking a door or other passageways in the vicinity of the device;
- recording in a data storage, such as a database, operations performed by or on the device and/or events that have occurred to the device and/or its location at any given time.

The invention allows monitoring of movement, speed, acceleration or orientation of a device i.e. of the monitored object. The invention enables the performing of necessary measures or, e.g. the collecting of information about the object automatically and in a form that is easy to process numerically. By monitoring an item, information about a patient can also be obtained. In this way, large amounts of e.g. patient data are automatically saved and obtained for further processing. A prompt and automatic alarm can be issued about a fallen or escaping patient or a reminder of a need to turn a patient to reduce bed sores may be sent to staff of a hospital or other care facility or to relatives of the patient.

The invention enables an easy following of care guidelines and easy maintenance of a patient care register. With the invention it is easy to register, for example, how many times and when the patient has been washed, visited the bathroom, the canteen or the outside. The invention makes it easy e.g. to monitor how often and when a patient has turned or has been turned. One can track how much, where and when the patient has moved and been, walked, stood, sat or slept.

According to the invention, the components of the sensor device are attached to or integrated in the device to be monitored. For example, the sensor device may be integrated into a treatment device. In an embodiment the sensor device is integrated into an electronic device, such as an electronic medical treatment device, such as a defibrillator or a ventilator. In one embodiment the integration is complete in such a way that one cannot notice during normal use of a device that it comprises the sensor device.

Certain parts of the invention, such as the analysation module and the execution module, are typically at least partially implemented and executed as a program code. Features and elements of the invention implemented as program code include a software maintained in computer memory and arranged to be executed thereon. The software comprises program code elements arranged to perform the necessary functions and steps of the invention. Computers, software, data storages such as databases, sensors, radio transmitters and receivers, data transmission means between parts of the invention, the use of artificial intelligence and other parts of the invention are known per se and their operation will not be described in more detail in this connection.

Microcontroller means an integrated circuit, which typically comprises at least one processor and usually at least some memory. Microcontrollers are known per se, and their structure and operation will not be discussed in more detail here.

In one embodiment of the invention, the data storage is at least partially in the sensor device, in connection with its microcontroller, for example in the memory of the microcontroller. In one embodiment, at least part of the acceleration data stored in the data storage is analysed algorithmically by the processor of the microcontroller. Data sent
to the receiver with the radio transmitter can then also comprise results of the analysis made with the microcontroller. In one embodiment of the invention, the data storage is entirely in the sensor device, in connection with the microcontroller, for example in the memory of the microcontroller. In one application, the analysis of the acceleration data stored in the data storage is performed entirely with the processor of the microcontroller. Analysis by the microcontroller enables faster and distributed analysis of acceleration data.

The electronic devices used in the invention, such as computers, processors, data storages and software, may also be located elsewhere than in the sensor device according to the invention. Acceleration data or part thereof or other data can be transmitted via the receiver to elsewhere, e.g. for saving or for further analysis.

In one embodiment of the invention a sensor device according to the invention gathering information about movement of an object is attached to the object, i.e. to the the monitored device.

Typically, a sensor device comprises a three-axis accelerometer, a microcontroller and a radio transmitter such as a Bluetooth transmitter or BLE transmitter (Bluetooth Low Energy). The software of the microcontroller enables monitoring of the movements of the object and the analysis of the acceleration data and wireless transmission of the acceleration data or the results of the analysis to the receiver. In one embodiment, one part of the acceleration data is analysed in the microcontroller and one part is transmitted elsewhere to be analysed, e.g. for a more detailed analysis. The sensor device also has a power supply, e.g. an accumulator or a battery. The sensor device reacts to movement of the monitored device, caused by a patient or another monitored object. The sensor device may analyse the collected data itself and send the analysis results to the receiver for further processing. The sensor device can transmit to a receiver e.g. real-time acceleration data, such as e.g. movement data and orientation data of a wheelchair of a patient. The sensor device or e.g. the receiver can store acceleration data or analysis results in a data storage. Artificial intelligence or other software analyses the data and creates on basis of what it learns an analysis, e.g. a forecast of the status of the object or the patient using it. This information can be used, for example, to guide care staff.

In addition to the acceleration data the sensor device may observe other things and send the other information it has collected and/or analysed via its transmitter to a receiver, and thereby for processing, e.g. for storing, analysing, or for other possible measures. The sensor device may e.g. comprise a temperature sensor and measure temperature of a device, a piece of furniture, a patient or the surroundings with the temperature sensor. The sensor device can measure its location e.g. with a satellite positioning device. The sensor device may comprise, for collecting information, e.g. a microphone, a camera and/or a moisture sensor.

The sensor device may be provided with a communication means, such as a loudspeaker or an indicator light, for transmitting messages to the monitored object and its surroundings, for example to the user of the device.

The sensor device may be provided with a button, such as a physical button e.g. to execute a patient call, or another means of communication, such as a microphone or a camera, to send a message from the object to a party monitoring it. Other possible means of interaction are, for example, a switch, an indicator light, a display device. In the eyes of its user, the sensor device can be very simple, even without any buttons, switches, indicator lights or other visible interaction means.

In one embodiment of the invention, all objects, patients and/or items in a certain area, e.g. in an area of risk of transmission of a disease, can be found quickly by means of the invention. The previous locations of patients and items that pose a risk of transmission can be easily determined. It is easy to monitor which of the patients and items that have been in the area of risk of transmission have already been treated or disinfected and which have not.

In an embodiment of the invention, when an area of risk of transmission of a disease has been defined, the past and present locations of the items causing a risk of transmission are determined using information previously collected and to be collected into a data storage. In an embodiment, it is monitored which of the items that have been in the area of risk of transmission of a disease have already been treated or disinfected and which have not. In an application, an alarm or notification is issued about objects that have been in the area of risk of transmission of a disease. For example, an audio or light signal may be activated in items that have been in the area of risk of transmission.

A method and system according to the invention can be used e.g. to find objects, patients and/or items causing a risk of transmission of a disease, to determine past locations of patients or items and/or to monitor which of the patients and/or items that have been in the area of risk of transmission have already been treated or disinfected and which have not.

In an embodiment of the invention, the location of an object is reported to the object and/or the party monitoring the object. Location data can be used in many ways. In one embodiment, the invention is used to locate a patient or another object.

In an embodiment of the invention, when it is found that an object is at a particular location, moving to a particular location and/or in a particular direction or at a certain speed, then one or more of locks and/or doors or other passageways in the vicinity of the object or in the direction of movement of the object are opened and/or closed. For example, in a hospital or other care facility, one or more doors may be opened, closed, or locked automatically depending on the location or the estimated or known route of an object, device, piece of furniture, or patient.

The system according to the invention can issue an alarm when an object, a device or a patient leaves a certain area. The location and route of an object can always be known e.g. during treatments, e.g. when moving from tests to further tests.

In an embodiment of the invention, the sensor device used for transmitting, recording or analysing acceleration data or results of analysis performed with the microcontroller only when the accelerometer produces a signal. This avoids unnecessary transmission of messages and conserves the power source.

In an embodiment of the invention, it is determined that something is wrong in at least one of the following situations:
- A device used by a patient or the patient has first moved faster than a certain limit value, and then does not move or moves less than a certain limit value. This may indicate a fall.
- A device used by a patient or the patient has not moved for a certain period of time. The patient's condition should be checked.
- Orientation of a device used by a patient or orientation of the patient has not changed sufficiently over a certain period of time. The patient's condition should be checked. It may be necessary to turn and move the patient periodically, for example to avoid bed sores.

Various assumptions about the status of a device and the patient using the device may be deduced from acceleration vectors produced by movement of the device. These may include e.g. immobility of the patient, falling down of the patient, restlessness of the patient or that the patient is in pain. This status information of the object may be shown e.g. to the care staff or to relatives, even in real time.

By using several receivers in various locations, the location of the object can be calculated by means of triangulation on the basis of signals received by the receivers. Of course, the sensor device can also monitor its position in other ways, for example by means of satellite positioning.

### BRIEF DESCRIPTION OF THE FIGURES

The invention is described in more detail below with reference to the enclosed schematic drawing, in which
- Figure 1: shows a patient in a bed,
- Figure 2: shows a patient in a bed and a display device for care staff,
- Figure 3: shows several patients in their beds and a display device for care staff,
- Figure 4: shows several patients, nurses and a display device for care staff,
- Figure 5: shows a patient and an IV stand,
- Figure 6: shows a patient leaving his room,
- Figure 7: shows a plan for a care facility, and
- Figure 8: shows how to assemble a sensor device according to the invention in three stages.

### DETAILED DESCRIPTION OF THE EXAMPLES OF THE FIGURES

For the sake of clarity, in different figures and embodiments same reference numerals are used for some parts corresponding to each other.

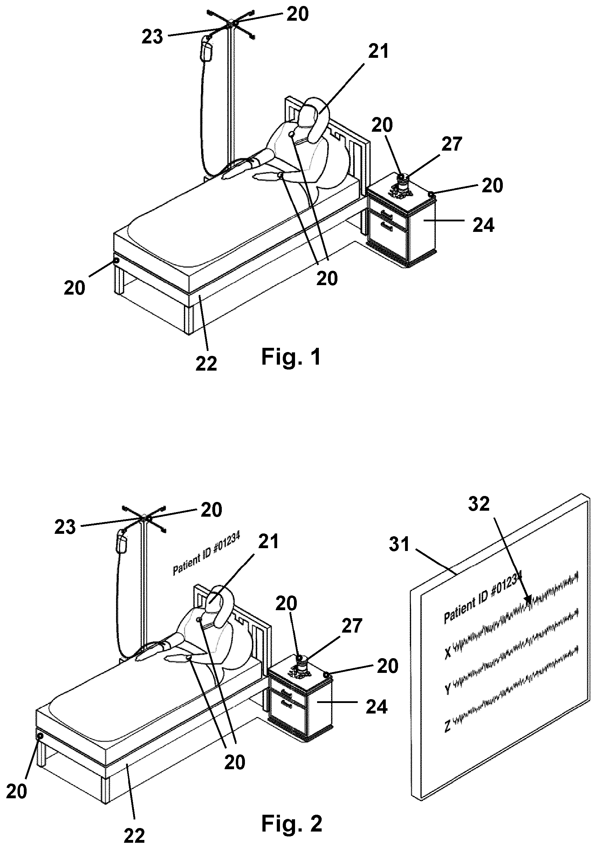

Figure 1 shows a patient 21 in a hospital bed 22. Adjacent to the bed are an IV stand 23 and a table 24. Sensor devices 20 according to the invention are attached or integrated into the bed 22, the IV stand 23 and the table 24. A sensor device 20 of the invention is also attached to the patient's collar with a needle, Velcro strap or other suitable fastener. One sensor device 20 according to the invention is attached to the wrist of the patient 21.

Figure 2 shows the patient of Figure 1 and schematically beside him his identification code (Patient ID) #01234, with which he is distinguished from other patients in the hospital. In addition, the figure shows a display device 31 of the care staff. The display device shows motion or health information 32 of the patient, which information is collected e.g. with the sensor devices 20 according to the invention.

All of the sensor devices 20 of the invention or items to which they are attached, have unique identifiers of their own corresponding to the patient identification code. The sensor devices 20 transmit their own identifiers with their data, and the data storage of the system retains information on where each sensor device 20 is attached. In other words, the system is able to associate each identifier with a certain item or patient. In this way, the status and movement of each item and patient can be monitored separately.

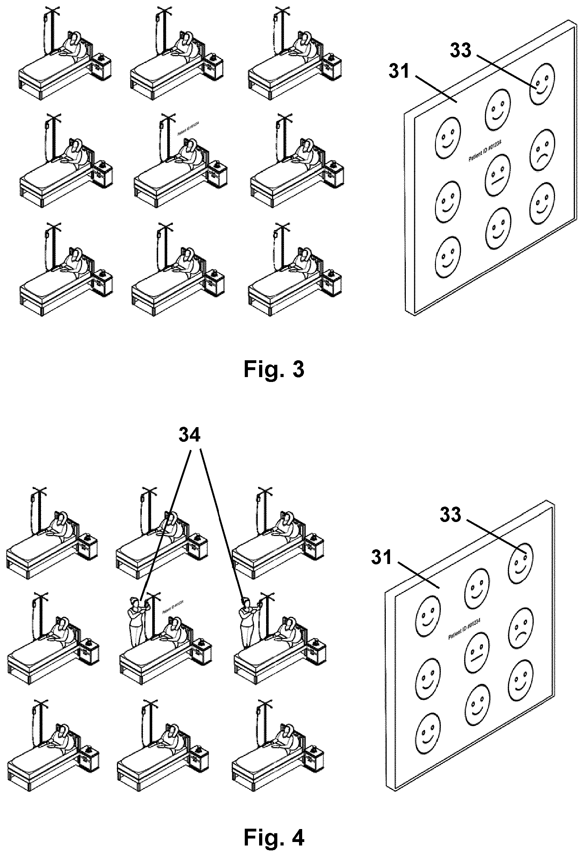

Figure 3 shows several patients in their beds and a display device 31 of the care staff. The display device 31 depicts patients or hospital items with emojis 33 depicting the state of the patient or items in his room. At positions of unproblematic patients and items a smiling emoji is shown. In the situation of the Figure, the system according to the invention has found that statuses of two of the patients 21 or their items are having some kinds of problems. On the display device 31 emojis of different degrees of sadness are shown at their positions.

Figure 4 shows the patients of Figure 3, but now the nurses 34 have arrived to check up on the problematic patients.

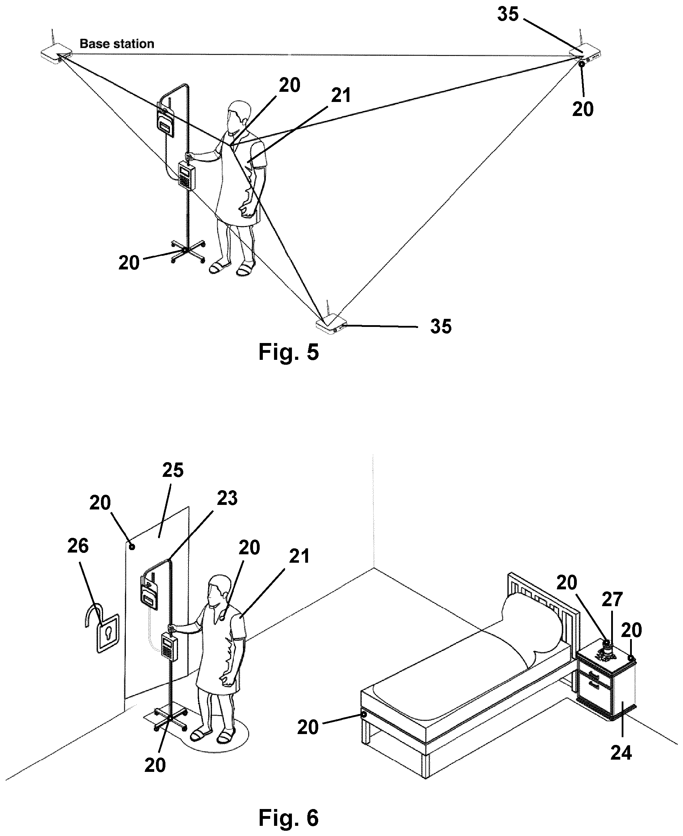

Figure 5 shows how base stations 35 can be used to determine the location of a patient 21 by triangulation using a radio signal transmitted by sensor devices 20 according to the invention attached to him or to the objects used by him. Similarly, the location of items such as an IV stand or receivers 35 can be determined.

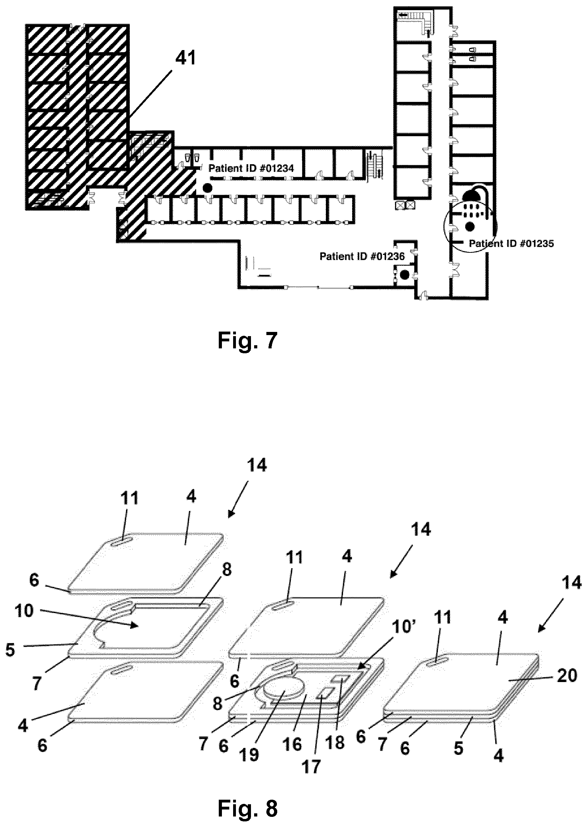

Figure 6 shows a patient 21 leaving his room. A sensor device 20 according to the invention is on the collar of the patient. An IV stand 23 and a medicine jar 27 also have the sensor devices 20 of the invention, so also the movement and location of them can be monitored. Likewise, the door 25 has sensor device 20 according to the invention, whereby the movement and orientation of the door can be monitored with a system according to the invention. The patient has come close to door 25 and he has moved it. The system detects the movement and location of the door 25, the IV stand 23 and the patient 21. The system can check, even before the patient 21 has opened the door 25, that the patient 21 has the right to leave the room with his IV stand 23. If the system detects that the patient has this right, the system can automatically open a door lock 26. The system can also check whether the patient, when moving in his room and/or when leaving the room, has with him all the necessary items e.g. health-supporting equipment such as IV stand 23 or medicines 27. If the system notices that there is no permission to leave the room or that the patient does not have a necessary item with him, it can e.g. issue an alarm to the personnel, lock the door, give an audio signal. Figure 7 shows a plan of a care facility, and it marked on it three patients whose position can be monitored e.g. with sensor devices 20 according to the invention attached to the clothes of the patient or to items used by him, such as an IV stand, a wheelchair or crutches. Patient #01234 is approaching an area forbidden to him,
marked with dashed lines 41. A warning is sent to the staff about the situation. The system could also close and lock doors that the patient is not allowed to pass through. Patient #01235 is in the shower, which the system records in his patient records. Patient #01236 is in a bathroom, which the system records in his patient records.

Figure 8 shows a sensor device 20 according to the invention and its plastic housing or case 14 in parts and the assembly of the parts in three stages. The case 14 consists of two end components 4 of the same shape and one middle component 5. A storage space 10 of the middle component forms in the finished case 14 a storage space 10' with the height of one component 5. The storage space 10 is closed on its edges in every direction. In the situation of the middle figure electrical components have been placed in storage space 10, i.e. a circuit board 16 which has a microcontroller 17, an accelerometer 18 and an accumulator or battery 19 and a radio transmitter (not shown in the figure) attached onto it. As one can see in the figure, the inner edge 8 of storage space 10 is formed to be fitted with the circuit board. In the right-hand-side figure the case 14, i.e. an electrical device 20, is shown assembled. Because case 14 comprises end components 4 without openings and a middle component 5 with its edge 5 closed in every direction, the case can be closed, i.e. the components attached to each other, e.g. with double-sided tape, or adhesive, very tightly.

The invention can be used to detect and record improper and/or rough behaviour and handling of devices of a care facility. When it is found that an accelerometer of one of the sensor devices 20 according to the invention produces a value of the acceleration data exceeding a certain limit value, it can be established that improper or rough handling has taken place. The event can then be immediately reported to the device, to the patient, to the surroundings of the device or the patient and/or to the party monitoring the device or the patient. For example, if a defibrillator is bumped too hard, can a sensor device 20 according the invention, which is attached to the device, give an audio signal and thus warn its user. If an object such as a mobility aid, which is however neither a medical treatment device nor a medicine storage device and therefore outside the scope of the invention, is monitored with sensor device 20 attached to it, and it is noted, e.g. that a rollator or a wheelchair turns and moves with a considerable speed and zigzags or falls down, can an alarm be sent to staff. If the system detects a device with an alarm on and a patient moving at the same pace and/or in the same location, it can be deduced that the patient is moving with the device.

The invention can be used to confine infectious diseases. If e.g. the patient (Patient ID: # 01234) adventuring in Figures 1, 3, 6 and 7 were to be determined as a carrier of an infectious disease, could the system quickly provide for information about his routes and devices he has used and movements of these devices inside the hospital during a certain period of time. These routes and devices and other people and devices that have been in contact with them would now be easy to identify and find and direct towards further measures, e.g. to be disinfected.

The invention is not intended to be limited to the examples given, but the scope of the invention is determined by the independent claims. The dependent claims present some preferred embodiments of the invention.

## Claims

1. A method for monitoring status and operation of a medical treatment device (23) of a care facility or a medicine storage device (27) of a care facility, **characterized in that** the monitoring is performed with a sensor device (20), which comprises an accelerometer (18), a radio transmitter, a micro controller (17) and a power source (19) that are functionally connected with each other, wherein the method comprises at least the following steps:
- attaching or integrating said components of the sensor device (20) to the monitored device (23, 27);
- producing an acceleration signal with the accelerometer (18);
- converting the acceleration signal into acceleration data;
- controlling the radio transmitter with the microcontroller (17) so that it transmits acceleration data to a receiver (35);
- storing the acceleration data in a data storage, such as a database;
- monitoring movement, speed, acceleration and/or orientation of the device (23, 27) on basis of the acceleration data;
- analysing the data stored in the data storage algorithmically with an analysation module;
- with the analysation module drawing conclusions on basis of the analysis about what and/or where has occurred and/or will occur to the device being observed;
whereby, on basis of the analysis, at least the following operation is performed:
- with an execution module alerting the device (23, 27) and/or a party (34) supervising the device.

2. A method according to claim 1, **characterised in that** the data storage is at least partly in the sensor device (20) in the memory of the microcontroller (17), whereby the method comprises the following step of
- analysing the data stored in the data storage algorithmically with a processor of the microcontroller (17), whereby the acceleration data sent with the radio transmitter to the receiver (35) comprises results of the analysis made with the microcontroller (17).

3. A method according to claim 2, **characterised in that** the data storage is in the sensor device (20) in the memory of the microcontroller (17), whereby the method comprises the following step of
- performing whole analysis of the acceleration data stored in the data storage with the processor of the microcontroller (17).

4. A method according to any previous claim, **characterised in that** when it is determined that the device (23, 27) is at a particular location, moving to a particular location and/or in a particular direction, then
- automatically opening and/or closing doors (25) or other passageways in the vicinity of the device or in the direction of movement of the device.

5. A method according to any previous claim, **characterised in that** movement of a patient (21) is monitored, and when movement of the patient (21) is observed to exceed certain thresholds,
- verifying that the patient (21) is accompanied by items he or she needs, i.e. health-sustaining equipment (23) or medicine storage device (27);
and if not,
- determining that the patient (21) is moving without an item he or she needs (23, 27); and
- reporting the event to the device (23, 27), to the patient (21), to surroundings of the device and/or to a party supervising the device.

6. A method according to any previous claim, **characterised in that** when movement of the device (23, 27) is observed to exceed certain thresholds,
- verifying that the movement of the device (23, 27) is permitted; and in the absence of a permit to the movement,
- determining that unauthorized movement of the device has taken place; and
- reporting the event to the device (23, 27), to surroundings of the device and/or to a party supervising the device.

7. A method according to any previous claim, **characterised in that** the method is used for detection and recording of unauthorized and/or rough handling of devices, whereby, when measured acceleration data of the device (23, 27) is observed to exceed a certain threshold defined for the device (23, 27)
- determining that unauthorized and/or rough handling of the device has been taken place; and
- reporting the event to the device (23, 27), to surroundings of the device and/or to a party supervising the device.

8. A method according to any previous claim, **characterised in that** the method is used for locating devices, whereby
- reporting the location of the device (23, 27) to the device, to surroundings of the device and/or to a party supervising the device.

9. A method according to any previous claim, **characterised in that** the method is used for control of risk of transmission of a disease, whereby when an area of risk of transmission of a disease has been defined:
- determining past locations of the devices (22, 23, 24, 25, 27) causing a risk of transmission and reporting the past locations to a party supervising the device;
- monitoring which devices (22, 23, 24, 25, 27) previously located in the area of risk of transmission of a disease have already been treated, e.g. disinfected, and which have not.

10. A method according to any previous claim, **characterised in that** the method is used for detecting and recording improper or rough behaviour and handling of devices and when it is found that the accelerometer of the sensor device (20) produces a value of the acceleration data exceeding a certain limit value, it is established that improper or rough handling has taken place, whereby this event is reported to the device, to the surroundings of the device and/or to the party monitoring the device.

11. A method according to claim 1, **characterised in that** the device is an electrical medical treatment device.

12. A method according to claim 11, **characterised in that** medical treatment device is a defibrillator.

13. A system for monitoring status and operation of a medical treatment device (23) of a care facility or a medicine storage device (27) of a care facility, **characterised in that** the system comprises
- a sensor device (20), which comprises an accelerometer (18), a radio transmitter, a micro controller (17) and a power source (19) that are attached or integrated to the monitored device (23, 27) and functionally connected with each other, which accelerometer is arranged to produce an acceleration signal, which is converted into acceleration data, and the microcontroller is arranged to control the radio transmitter, and the radio transmitter is arranged to transmit acceleration data;
- a receiver (35) for receiving the acceleration data;
- a data storage, such as a database, in which the acceleration data is stored;
- an analysation module, which is arranged to monitor movement, speed, acceleration and/or orientation of the device (23, 27) on basis of the acceleration data, and to analyse the data stored in the data storage algorithmically, and to draw conclusions on basis of the analysis about what and/or where has occurred and/or will occur to the device being observed;
- an execution module, which is arranged to perform on basis of the analysis at least the following operation: alerting and/or notifying the device and/or a party supervising the device.

14. A system according to claim 13, **characterised in that** the data storage is at least partly in a memory of a processor of the microcontroller (17) of the sensor device (20) and that the analysation module is arranged at least partly in program code elements that are saved in the memory of the processor of the microcontroller (17) of the sensor device (20) and that they are arranged to be executed in the memory.

15. A system according to claim 14, **characterised in that**
- the data storage is in the memory of the processor of the microcontroller (17) of the sensor device (20), and that
- the analysation module is arranged in program code elements that are saved in the memory of the processor of the microcontroller (17) of the sensor device (20).

## Patentansprüche

1. Ein Verfahren zur Überwachung des Status und Betriebs einer medizinischen Behandlungsvorrichtung (23) einer Pflegeeinrichtung oder einer Arzneimittelaufbewahrungsvorrichtung (27) einer Pflegeeinrichtung, **dadurch gekennzeichnet, dass** die Überwachung mit einer Sensorvorrichtung (20) erfolgt, die einen Beschleunigungsmesser (18), einen Funksender, einen Mikrocontroller (17) und eine Stromquelle (19) umfasst, die funktional miteinander verbunden sind, wobei das Verfahren mindestens die folgenden Schritte umfasst:
- Anbringen oder Integrieren der genannten Komponenten der Sensorvorrichtung (20) an der überwachten Vorrichtung (23, 27);
- Erzeugen eines Beschleunigungssignals mit dem Beschleunigungsmesser (18);
- Umwandeln des Beschleunigungssignals in Beschleunigungsdaten;
- Steuern des Funksenders mit dem Mikrocontroller (17), sodass dieser Beschleunigungsdaten an einen Empfänger (35) überträgt;
- Speichern der Beschleunigungsdaten in einem Datenspeicher, beispielsweise in einer Datenbank;
- Überwachen der Bewegung, Geschwindigkeit, Beschleunigung und/oder Ausrichtung der Vorrichtung (23, 27) beruhend auf den Beschleunigungsdaten;
- algorithmisches Analysieren der im Datenspeicher gespeicherten Daten mit einem Analysemodul;
- Schlussfolgern anhand des Analysemoduls, was und/oder wo etwas mit der überwachten Vorrichtung passiert ist und/oder passieren wird;
wobei beruhend auf der Analyse mindestens folgende Handlung durchgeführt wird:
- mit einem Ausführungsmodul, das die Vorrichtung (23, 27) und/oder eine die Vorrichtung überwachende Partei (34) alarmiert.

2. Ein Verfahren nach Anspruch 1, **dadurch gekennzeichnet, dass** die Datenspeicherung zumindest teilweise in der Sensorvorrichtung (20) im Speicher des Mikrocontrollers (17) erfolgt, wobei das Verfahren den folgenden Schritt umfasst:
- algorithmisches Analysieren der im Datenspeicher gespeicherten Daten mit einem Prozessor des Mikrocontrollers (17), wobei die mit dem Funksender an den Empfänger (35) gesendeten Beschleunigungsdaten Ergebnisse der mit dem Mikrocontroller (17) durchgeführten Analyse umfassen.

3. Ein Verfahren nach Anspruch 2, **dadurch gekennzeichnet, dass** die Datenspeicherung in der Sensorvorrichtung (20) im Speicher des Mikrocontrollers (17) erfolgt, wobei das Verfahren den folgenden Schritt umfasst:
- Ausführen einer vollständigen Analyse der im Datenspeicher gespeicherten Beschleunigungsdaten mit dem Prozessor des Mikrocontrollers (17).

4. Ein Verfahren nach einem der vorherigen Ansprüche, **dadurch gekennzeichnet, dass**, wenn festgestellt wird, dass sich die Vorrichtung (23, 27) an einem bestimmten Ort befindet, sich zu einem bestimmten Ort und/oder in eine bestimmte Richtung bewegt,
- automatisch die Türen (25) oder sonstige Durchgänge in der Umgebung der Vorrichtung bzw. in Bewegungsrichtung der Vorrichtung geöffnet und/oder geschlossen werden.

5. Ein Verfahren nach einem der vorherigen Ansprüche, **dadurch gekennzeichnet, dass** die Bewegung eines Patienten (21) überwacht wird, und wenn festgestellt wird, dass die Bewegung des Patienten (21) bestimmte Schwellenwerte überschreitet,
- verifiziert wird, ob der Patient (21) die Gegenstände mit sich führt, die er benötigt, d. h. gesundheitserhaltende Vorrichtungen (23) oder ein Arzneimittelaufbewahrungsvorrichtung (27);
und falls nicht,
- bestimmt wird, dass sich der Patient (21) ohne einen Gegenstand bewegt, den er benötigt (23, 27); und
- das Ereignis der Vorrichtung (23, 27), dem Patienten (21), der Umgebung der Vorrichtung und/oder einer die Vorrichtung überwachende Partei gemeldet wird.

6. Ein Verfahren nach einem der vorherigen Ansprüche, **dadurch gekennzeichnet, dass**, wenn eine Bewegung der Vorrichtung (23, 27) beobachtet wird, die bestimmte Schwellenwerte überschreitet,
- verifiziert wird, dass die Bewegung der Vorrichtung (23, 27) zulässig ist; und sofern die Bewegung unzulässig ist,
- festgelegt wird, dass eine unbefugte Bewegung der Vorrichtung erfolgt ist; und
- das Ereignis der Vorrichtung (23, 27), der Umgebung der Vorrichtung und/oder einer die Vorrichtung überwachende Partei gemeldet wird.

7. Ein Verfahren nach einem der vorherigen Ansprüche, **dadurch gekennzeichnet, dass** das Verfahren zur Erkennung und Aufzeichnung einer unbefugten und/oder groben Handhabung von Vorrichtungen verwendet wird, wobei, wenn beobachtet wird, dass die gemessenen Beschleunigungsdaten der Vorrichtung (23, 27) einen bestimmten, für die Vorrichtung (23, 27) definierten Schwellenwert überschreiten,
- festgelegt wird, dass eine unbefugte und/oder grobe Handhabung der Vorrichtung erfolgt ist; und
- das Ereignis der Vorrichtung (23, 27), der Umgebung der Vorrichtung und/oder einer die Vorrichtung überwachende Partei gemeldet wird.

8. Ein Verfahren nach einem der vorherigen Ansprüche, **dadurch gekennzeichnet, dass** das Verfahren zur Ortung von Vorrichtungen verwendet wird, wobei
- der Standort der Vorrichtung der Vorrichtung (23, 27), der Umgebung der Vorrichtung und/oder einer die Vorrichtung überwachende Partei gemeldet wird.

9. Ein Verfahren nach einem der vorherigen Ansprüche, **dadurch gekennzeichnet, dass** das Verfahren zur Kontrolle des Risikos der Übertragung einer Krankheit verwendet wird, wobei, wenn ein Risikobereich einer Krankheitsübertragung definiert wurde,
- vergangene Standorte der Vorrichtungen (22, 23, 24, 25, 27) ermittelt werden, an denen ein Übertragungsrisiko besteht, und die vergangenen Standorte einer die Vorrichtung überwachende Partei gemeldet werden;
- überwacht wird, welche Vorrichtungen (22, 23, 24, 25, 27), die sich zuvor im Risikobereich einer Krankheitsübertragung befanden, bereits behandelt, z. B. desinfiziert wurden, und welche nicht.

10. Ein Verfahren nach einem der vorherigen Ansprüche, **dadurch gekennzeichnet, dass** das Verfahren zum Erkennen und Aufzeichnen von unsachgemäßem oder grobem Verhalten und Umgang mit Vorrichtungen verwendet wird, und wenn festgestellt wird, dass der Beschleunigungsmesser der Sensorvorrichtung (20) einen Beschleunigungsdatenwert erzeugt, der einen bestimmten Grenzwert überschreitet, festgelegt wird, dass ein unsachgemäßer oder grober Umgang stattgefunden hat, wobei dieses Ereignis der Vorrichtung, der Umgebung der Vorrichtung und/oder der die Vorrichtung überwachende Partei gemeldet wird.

11. Ein Verfahren nach Anspruch 1, **dadurch gekennzeichnet, dass** es sich bei der Vorrichtung um ein elektrische medizinische Behandlungsvorrichtung handelt.

12. Ein Verfahren nach Anspruch 11, **dadurch gekennzeichnet, dass** die medizinische Behandlungsvorrichtung ein Defibrillator ist.

13. Ein System zur Überwachung des Status und Betriebs einer medizinischen Behandlungsvorrichtung (23) einer Pflegeeinrichtung oder einer Arzneimittelaufbewahrungsvorrichtung (27) einer Pflegeeinrichtung, **dadurch gekennzeichnet, dass** das System Folgendes umfasst:
- eine Sensorvorrichtung (20), die einen Beschleunigungsmesser (18), einen Funksender, einen Mikrocontroller (17) und eine Stromquelle (19) umfasst, die an der überwachten Vorrichtung (23, 27) angebracht oder in diese integriert und funktionell mit ihr verbunden sind, wobei der Beschleunigungsmesser ein Beschleunigungssignal erzeugt, das in Beschleunigungsdaten umgewandelt wird, der Mikrocontroller den Funksender steuert und der Funksender Beschleunigungsdaten überträgt;
- einen Empfänger (35) zum Empfangen der Beschleunigungsdaten;
- einen Datenspeicher, beispielsweise eine Datenbank, in dem die Beschleunigungsdaten gespeichert werden;
- ein Analysemodul, das dazu eingerichtet ist, die Bewegung, Geschwindigkeit, Beschleunigung und/oder Ausrichtung der Vorrichtung (23, 27) beruhend auf den Beschleunigungsdaten zu überwachen, die im Datenspeicher gespeicherten Daten algorithmisch zu analysieren und beruhend auf der Analyse schlusszufolgern, was und/oder wo etwas mit der überwachten Vorrichtung passiert ist und/oder passieren wird;
- ein Ausführungsmodul, das dazu eingerichtet ist, beruhend auf der Analyse mindestens die folgende Handlung durchzuführen: Alarmieren und/oder Benachrichtigen der Vorrichtung und/oder einer die Vorrichtung überwachenden Partei.

14. Ein System nach Anspruch 13, **dadurch gekennzeichnet, dass** die Datenspeicherung zumindest teilweise in einem Speicher eines Prozessors des Mikrocontrollers (17) der Sensorvorrichtung (20) erfolgt und dass das Analysemodul zumindest teilweise in Programmcodeelementen angeordnet ist, die im Speicher des Prozessors des Mikrocontrollers (17) der Sensorvorrichtung (20) gespeichert sind und zur Ausführung im Speicher vorgesehen sind.

15. Ein System nach Anspruch 14, **dadurch gekennzeichnet, dass**
- die Datenspeicherung im Speicher des Prozessors des Mikrocontrollers (17) der Sensorvorrichtung (20) erfolgt, und dass
- das Analysemodul in Programmcodeelementen angeordnet ist, die im Speicher des Prozessors des Mikrocontrollers (17) der Sensorvorrichtung (20) gespeichert sind.

## Revendications

1. Procédé de surveillance de l'état et du fonctionnement d'un dispositif de traitement médical (23) d'un établissement de soins ou d'un dispositif de stockage de médicaments (27) d'un établissement de soins, **caractérisé en ce que** la surveillance est effectuée à l'aide d'un dispositif capteur (20) qui comprend un accéléromètre (18), un émetteur radio, un microcontrôleur (17) et une source d'alimentation (19) qui sont fonctionnellement connectés entre eux, le procédé comprenant au moins les étapes suivantes :
- à fixer ou à intégrer lesdits composants du dispositif capteur (20) au dispositif surveillé (23, 27) ;
- à produire un signal d'accélération à l'aide de l'accéléromètre (18) ;
- à convertir le signal d'accélération en données d'accélération ;
- à contrôler l'émetteur radio à l'aide du microcontrôleur (17) afin qu'il transmette les données d'accélération à un récepteur (35) ;
- à stocker les données d'accélération dans un stockage de données, telle qu'une base de données ;
- à surveiller le mouvement, la vitesse, l'accélération et/ou l'orientation du dispositif (23, 27) sur la base des données d'accélération ;
- à analyser algorithmique des données stockées dans le stockage de données à l'aide d'un module d'analyse ;
- à l'aide du module d'analyse, à tirer des conclusions sur la base de l'analyse concernant ce qui s'est produit et/ou se produira et/ou où s'est produit et/ou se produira au dispositif observé ;
de sorte que, sur la base de l'analyse, au moins l'opération suivante est effectuée :
- à l'aide d'un module d'exécution, à alerter le dispositif (23, 27) et/ou une partie (34) supervisant le dispositif.

2. Procédé selon la revendication 1, **caractérisé en ce que** le stockage des données s'effectue au moins en partie dans le dispositif capteur (20) dans la mémoire du microcontrôleur (17), le procédé comprenant l'étape suivante consistant à
- analyser les données stockées dans le stockage de données de manière algorithmique à l'aide d'un processeur du microcontrôleur (17), les données d'accélération envoyées par l'émetteur radio au récepteur (35) comprenant les résultats de l'analyse effectuée à l'aide du microcontrôleur (17).

3. Procédé selon la revendication 2, **caractérisé en ce que** le stockage des données se fait dans le dispositif capteur (20) dans la mémoire du microcontrôleur (17), le procédé comprenant l'étape suivante consistant à
- réaliser une analyse complète des données d'accélération stockées dans le stockage de données à l'aide du processeur du microcontrôleur (17).

4. Procédé selon l'une quelconque des revendications précédentes, **caractérisé en ce que** lorsqu'il est déterminé que le dispositif (23, 27) se trouve à un emplacement particulier, se déplace vers un emplacement particulier et/ou dans une direction particulière, alors
- automatiquement ouvrir et/ou fermer portes (25) ou autres passages à proximité du dispositif ou dans la direction de mouvement du dispositif.

5. Procédé selon l'une quelconque des revendications précédentes, **caractérisé en ce que** le mouvement d'un patient (21) est surveillé, et lorsque le mouvement du patient (21) est observé comme dépassant certains seuils,
- vérifier que le patient (21) est accompagné des équipements essentiels, c'est-à-dire du matériel médical (23) ou du dispositif de stockage de médicaments (27) ;
et si ce n'est pas le cas,
- déterminer que le patient (21) se déplace sans l'équipement essentiel (23, 27) ; et
- signaler l'événement au dispositif (23, 27), au patient (21), à l'environnement du dispositif et/ou à une partie supervisant le dispositif.

6. Procédé selon l'une quelconque des revendications précédentes, **caractérisé en ce que** lorsque le mouvement du dispositif (23, 27) dépasse certains seuils,
- vérifier que le mouvement du dispositif (23, 27) est autorisé ;
et en l'absence d'autorisation du mouvement,
- déterminer qu'un mouvement non autorisé du dispositif a eu lieu ; et
- signaler l'événement au dispositif (23, 27), à l'environnement du dispositif et/ou à une partie supervisant le dispositif.

7. Procédé selon l'une quelconque des revendications précédentes, **caractérisé en ce que** le procédé est utilisé pour détecter et enregistrer une manipulation non autorisée et/ou brutale des dispositifs, de sorte que, lorsque les données d'accélération mesurées du dispositif (23, 27) dépassent un certain seuil défini pour le dispositif (23, 27)
- déterminer qu'une manipulation non autorisée et/ou brutale du dispositif a eu lieu ; et
- signaler l'événement au dispositif (23, 27), à l'environnement du dispositif et/ou à une partie supervisant le dispositif.

8. Procédé selon l'une quelconque des revendications précédentes, **caractérisé en ce que** le procédé est utilisée pour localiser dispositifs, et consiste à :
- signaler l'emplacement du dispositif (23, 27) au dispositif, à l'environnement du dispositif et/ou à une partie supervisant le dispositif.

9. Procédé selon l'une quelconque des revendications précédentes, **caractérisé en ce que** le procédé est utilisé pour contrôler le risque de transmission d'une maladie, de sorte que, lorsqu'une zone de risque de transmission d'une maladie a été définie :
- déterminer les emplacements antérieurs des dispositifs (22, 23, 24, 25, 27) susceptibles de présenter un risque de transmission et signaler les emplacements antérieurs à une partie supervisant le dispositif ;
- surveiller quels dispositifs (22, 23, 24, 25, 27), précédemment localisés dans ladite zone à risque, ont déjà été traités, notamment désinfectés, et lesquels ne l'ont pas encore été.

10. Procédé selon l'une quelconque des revendications précédentes, **caractérisé en ce que** le procédé est utilisé pour détecter et enregistrer un comportement et une manipulation inappropriés ou brutaux des dispositifs et, lorsqu'il est constaté que l'accéléromètre du dispositif capteur (20) produit une valeur des données d'accélération dépassant une certaine valeur limite, il est établi qu'une utilisation inappropriée ou une manipulation brutale a eu lieu, de sorte que cet événement est alors signalé au dispositif, à l'environnement du dispositif et/ou à la partie surveillant le dispositif.

11. Procédé selon la revendication 1, **caractérisé en ce que** le dispositif est un dispositif électrique de traitement médical.

12. Procédé selon la revendication 11, **caractérisé en ce que** le dispositif de traitement médical est un défibrillateur.

13. Système de surveillance de l'état et du fonctionnement d'un dispositif de traitement médical (23) d'un établissement de soins ou d'un dispositif de stockage de médicaments (27) d'un établissement de soins, **caractérisé en ce que** le système comprend
- un dispositif capteur (20), comprenant un accéléromètre (18), un émetteur radio, un microcontrôleur (17) et une source d'alimentation (19), lesquels sont fixés ou intégrés au dispositif surveillé (23, 27) et fonctionnellement connectés entre eux, l'accéléromètre étant agencé pour produire un signal d'accélération, lequel est converti en données d'accélération, le microcontrôleur étant agencé pour contrôler l'émetteur radio, et l'émetteur radio étant agencé pour transmettre les données d'accélération ;
- un récepteur (35) pour recevoir les données d'accélération ;
- un stockage de données, telle qu'une base de données, dans laquelle les données d'accélération sont stockées ;
- un module d'analyse, qui est agencé pour surveiller le mouvement, la vitesse, l'accélération et/ou l'orientation du dispositif (23, 27) sur la base des données d'accélération, et pour analyser de manière algorithmique les données stockées dans le stockage de données, et pour tirer des conclusions sur la base de l'analyse concernant ce qui s'est produit et/ou se produira et/ou où s'est produit et/ou se produira au dispositif observé ;
- un module d'exécution, qui est agencé pour effectuer, sur la base de l'analyse, au moins l'opération suivante : alerter et/ou notifier le dispositif et/ou une partie supervisant le dispositif.

14. Système selon la revendication 13, **caractérisé en ce que** le stockage de données est au moins partiellement effectué dans une mémoire d'un processeur du microcontrôleur (17) du dispositif capteur (20), et **en ce que** le module d'analyse est agencé au moins partiellement sous forme d'éléments de code programme enregistrés dans la mémoire du processeur du microcontrôleur (17) du dispositif capteur (20), lesdits éléments étant agencés pour être exécutés dans ladite mémoire.

15. Système selon la revendication 14, **caractérisé en ce que**
- le stockage des données s'effectue dans la mémoire du processeur du microcontrôleur (17) du dispositif capteur (20), et que
- le module d'analyse est agencé dans des éléments de code de programme qui sont enregistrés dans la mémoire du processeur du microcontrôleur (17) du dispositif capteur (20).
